# EUROPEAN PATENT SPECIFICATION

(11) **EP 1 063 501 B1**
(45) Date of publication and mention of the grant of the patent: **02.05.2003**
(21) Application number: 99112198.9
(22) Date of filing: 24.06.1999
(51) Int. Cl.: G01J 3/02, B07C 5/342

(54) **Measurement head for an optical measurement device**
Messkopf für optisches Messgerät
Tête de mesure pour instrument de mesure optique

(43) Date of publication of application: 27.12.2000
(73) Proprietor: Sony International (Europe) GmbH, 50829 Köln (DE)
(72) Inventor: Zoidis, Evangelos, c/o Sony International GmbH, 70736 Fellbach (DE); Tomita, Hidemi, c/o Sony International GmbH, 70736 Fellbach (DE)
(74) Representative: Appelt, Christian W.

(56) References cited:
- EP-A- 0 511 806
- EP-A- 0 706 838
- WO-A-95/27892

## Description

The present invention is related to a measurement head for an optical measurement device, especially a spectrometer device, that can be used preferably for identification of different plastic materials.

Plastics industry has experienced a permanent global growth in the past decades and this tendency will be continued in the future, as plastic products are used for a lot of products, being sold in increasing numbers. Especially cases for computers, laptops, screens, televisions, packaging materials, interior elements and devices in cars as well as external automotive parts, furniture, cases for electronic devices etc. are manufactured from different plastic materials or even combinations thereof.

With the increasing manufacturing of plastic and plastic products, disposal and recycling of such plastic products has become a problem for the environment. Therefore, it is desired to recycle most of the plastic materials. For an effective recycling, it is necessary that these plastic materials are identified and separated, as different materials require different and separated further treatments.

For identification of different plastic materials optical measurement devices, especially spectrometer devices, can be used. For transparent plastics, as known from household or packaging, especially a spectroscopy measurement analysing transmitted or reflected light can be used. The identification and separation of carbon-filled (black plastics), as especially known e.g. from electronic products and respective cases, is more difficult. Normally, identification of these plastics is operated using mid-infrared reflection (MIR-) spectroscopy, but the reflected signals of the sample surface and the effective light collection is normally very weak, making a reliable measurement difficult and/or time-consuming and leading to erroneous identifications.

It is most essential for a reliable measurement that the samples are tested under clearly reliable and determined conditions and that a higher percentage of the reflected light reaches the detector for ensuring reliable spectrometric analysis.

From EP 0 511 806 A2 a spectrophotometric apparatus is known having a specific light integrating sphere for reflectance spectroscopy formed within a block of diffusely reflecting polymeric material internally hollowed into a spherical surface. The sphere is provided with an aperture for passing light into the block for diffuse reflectance or transmittance measurements.

From WO 95/27892 an apparatus for identifying plastics is known. This apparatus comprises a spectrometer and an interface device comprising a front wall with a sample aperture, against which the sample can be placed so that the surface of the sample is exposed through the aperture. The interface device can be pushed into a protective housing, when a sample is pushed against the front wall. Switches with mechanical support are provided, initiating measurement steps as e.g. cleaning of the sample and activating spectrometer measurement in dependence of the position of the interface device relative to said protective housing.

The positioning of the sample relative to the interface device and therefore to the protective housing and the spectrometer device, respectively, is neither supported or controlled. This is especially problematic, when the sample to be tested does not have a plane or flat surface, but a curved or any irregular surface.

It is therefore an object of the present invention to provide a measurement head ensuring a precise and controlled measurement of plastic samples and to collect a high percentage of the reflected measurement light in order to ensure reliable spectrometric analysis.

This object of the invention is solved by a measurement head according to claim 1, claims 2 to 21 show preferred embodiments of an inventive measurement head according to independent claim 1.

The inventive measurement head comprises a front unit, being moveable and/or compressible and extendable between a starting position and a measuring position. The front unit is biased to be in the starting position, when no pressure or force is applied.

The front unit comprises at least three carrier points for positioning a sample relative to the front unit. The at least three carrier points define a plane, where the sample to be tested is positioned at, in a defined position relative to the front unit. Not only in the case, when said sample has a flat surface, but also in cases where the surface of the sample is curved or irregular, an optimal position of the sample relative to the front unit and, when in measuring position, relative to the fixed rear unit and therefore to the optical measurement device, namely in parallel to the plane defined by the triangular arrangement of the three carrier points in the most possible extent, is ensured. This is also true for a convex curved surface of the sample, as it is e.g. in the case of a vehicle bumper.

With such an arrangement, even with above-mentioned curved irregular surfaces of the samples, an angle of reflection is optimized and reliable, also in case multiple measurements are conducted. With the optimized and clearly determined angle of reflection, the primary reflection direction is fixed and does not deviate, thereby ensuring a maximum yield of reflected light and a high efficiency of the measurement.

Each of the at least three carrier points is further provided with a sensor indicating, whether said sample is in contact with the respective carrier point, as a contact with all carrier points is necessary for ensuring the desired positioning of the sample. The combined indication of the sensors therefore clearly shows, when a measurement can be taken. The measurement can also be conducted and initiated automatically, when all sensors show a contact of the sample with the carrier points.

A precise and reliable measurement is therefore achieved, independent of the shape of the sample to be tested, as the sample will be automatically and optimally positioned depending on its shape.

Preferably, the sensors are realized by electrical contacts actuated by a force or a pressure applied to the sensors, when a sample to be tested will be pressed and pushed against the carrier points of the front unit of the measurement head.

In a preferred embodiment each of the electrical contacts comprises at least one movable conductive element. The conductive elements are closing an electrical circuit, when they are pressed or pushed by a sample to be tested, as explained above. An electrical signal can therefore be used to indicate that the sample is in contact with all carrier points and in the desired position. The information can be given to an operator, e.g. on a screen, and/or given to a control unit as a necessary condition for triggering or initiating the optical measurement. The electrical sensors therefore control and ensure the correct and desired positioning of the sample at measuring time, thereby relieving the operator from his duty of controlling the position manually.

The front unit preferably comprises exactly three carrier points, thereby realizing a triangle design of the front unit of the measurement head. These three carrier points define a plane, and they also ensure a proper and exact positioning of the sample, when the sample does not have a flat surface, but probably a curved or irregular surface, especially a convex curved surface. By this triangle design, always the best positioning of the sample, depending on its shape, will be automatically realized, thereby ensuring an always constant reflection angle, being one of the most important factors in yielding a maximum reflection light and ensuring a high efficiency measurement.

In a further embodiment, the at least three carrier points further comprise a ring-like member, having a flat surface, wherein the sensors are positioned on an outer surface of said ring-like member, to be activated, when a sample is pushed against the carrier points. This may be especially advantageous, when most of the samples are actually plane-shaped, as then a contact over the whole surface of the ring-like member will be achieved.

The at least three carrier points can also comprise a plate having a plane surface, whereas the shape of the plate may vary and wherein the sensors are positioned on an outer surface of said plate, to be activated, when a sample is pushed against the carrier points. Such a design is especially advantageous, when mainly larger samples with flat surfaces have to be tested.

With varying surface shapes of the sample on the other hand, the above-described triangle design is more effective and reliable, as a surface with a curved or irregular shape can hardly exactly be positioned on a plane surface, therefore varying of the position may occur during measurement, as normally the sample will be handhold by the operator during the measurement.

The front unit is moveably or compressibly and extandably connected with the rear unit of the measurement head. The front unit is biased to be in a starting position, whereas this starting position is a position in which the front unit is in the most outward position, i.e. extended to its most possible extent, the carrier points of the front unit at a position distant from the rear unit as far as possible.

A moveable front unit may further comprise spring means or bumper means generating the biasing force so that the moving head can be compressed or pushed towards and/or partially into the rear unit against the force of the spring or bumper means.

In one embodiment the front unit further comprises collapsible bellows or any other comparable means. It is for example possible that the front unit comprises different segments being pushed into one another when moving the front unit in direction to the rear unit or compressing the front unit respectively.

It is therefore possible to move the front unit, especially by pushing the carrier points directly or indirectly with the sample against the biasing force, from the starting position to the measuring position. A smooth positioning of the sample by the operator can therefore be achieved.

According to a further aspect of the present invention, the measurement head further comprises grinding means for grinding a sample at least partially. Normally a surface area of 1 to 4 cm² will be grinded. With such grinding means it is possible to prepare or condition the part of the sample where it will be measured at, i.e. where the light will be reflected from the sample for a spectrometric measurement. Such grinding means are flattening and clearing the respective portion of the sample, thereby ensuring reliable measurements. Such a grinding is important, when the sample to be tested is dirty or contaminated or especially when the surface is coated. Such a coating may be a protecting coating or a lacquer, which has been applied to the plastic material for optical or protective reasons.

Such coatings, especially paint coatings, are normally very thin so that only a very short grinding procedure will be sufficient for ensuring an undisturbed measurement of the plastic material.

Preferably the grinding means are exchangeable, in order to exchange used grinding means after a certain circle of activities, as wear might influence the measurement. Furthermore, it is possible to choose between the front grinding means, especially between different qualities of grinding means in order to accommodate or adapt the measurement head to the respective samples or group of samples to be tested.

In one embodiment the grinding means are operated mechanically. Such grinding means are preferably actuated by the translational movement of the moveable front unit from the starting position to the measuring position. The translational motion will be converted preferably in a circular motion of the grinding means. Thereby an additional power source and control means and/or sensors will not be necessary. The construction of the measurement head will therefore be less complex, decreasing the manufacturing costs and decreasing reasons for a possible malfunction. Furthermore, there is no motor necessary that can possibly disturb the very sensitive measurements.

According to a still further aspect of the invention, the grinding means comprise multiple elements, whereas these elements are radially retractable to open an aperture within the grinding means. The grinding means are therefore in structure comparable to a photographic aperture diaphragm, whereas one side of the grinding means in form of the diaphragm is coated with abrasive material. With such a construction the desired portion of the sample can be prepared, whereas after preparation the element of the grinding means are retracted radially, opening an aperture so that a measurement through this aperture will be possible. A complex sideward movement of the grinding means and a respective mechanical structure in order to allow measurements is therefore omitted, but is of course also a possibility for an arrangement of the grinding means.

Preferably the measurement head further comprises cleaning means for cleaning the measurement head and/or the sample. Especially the generating of an air-flow or another gas-flow, preferably generated by at least one vacuum and/or overpressure device, connected to the measurement head, is very useful to clean both the device and the measurement head itself and the surface of the sample in order to achieve a good reflection, reliable measurements and in order to avoid diffusion of light in the most possible extent.

Preferably the gas-flow is at least partially curve-shaped, preferably around an axis that is normal to the surface of the sample. This is especially useful when grinding means are provided that also rotate around an axis being normal to the surface of the sample to be tested, as it is the case for the above-described means in form of a photographic aperture diaphragm. The grinding particles are forced radially outward by centrifugal forces and will then completely be removed by the gas-flow being especially strong in the radial outward portions.

According to a further aspect of the invention, the measurement head comprises a robot arm for automatically or semi-automatically grapping a sample and positioning it for measurement. The robot arm can be controlled on the basis of the sensors, indicating a contact of the sample with the carrier points or indicating a measuring position of the front unit of the measurement head. The sample is thereby easily brought into position, utilizing the above mentioned advantages and further relieving the operator from his duties.

According to a further aspect of the invention the fixed rear unit comprises a collector device for collecting not only the primary reflected rays but also the diffused or scattered light reflected from the sample surface. A highly effective yielding of reflection light and a high intensity is thereby achieved, mainly supporting a reliable measurement and reliable analysis.

Such a collector device is preferably cone-shaped or a spherical system, providing for multiple reflection in order to finally collect as much intensity as possible at a detector device.

The collector device preferably comprises reflecting surfaces with a high reflection coefficient, preferably they are coated with a reflective material, especially with gold, silver, copper or similar materials.

The above-described collector device ensures that not only directly reflected light but also diffused and scattered light will be efficiently collected, as the measurements will be more reliable with a higher intensity of light. Such an effective collection of reflected light is especially important with the carbon-filled (black) plastics, as the reflection signals in these cases are very weak. Furthermore, the signal-to-noise ratio will be less sensitive to sample shape, roughness or position adjustment, because diffuse reflected light will be collected more effectively.

In summary, the inventive measurement head therefore ensures a high efficiency measurement by ensuring a highly precise position of the sample to be tested and therefore a highly precise reflecting angle in order to exactly direct the reflected light to the detector and further ensures an efficient collection and direction of the diffused or scattered light to the detector. Very reliable results and high identification rates can therefore be achieved by the inventive measurement head.

Further features and advantages of the present invention will be apparent from the detailed description of preferred embodiments shown in the attached drawings wherein
- Fig. 1: schematically and simplified shows a preferred embodiment of an inventive measurement head,
- Fig. 2: schematically and simplified shows a part of the front unit of a further preferred embodiment, and
- Fig. 3: schematically and simplified shows a part of the front unit of a still further embodiment.

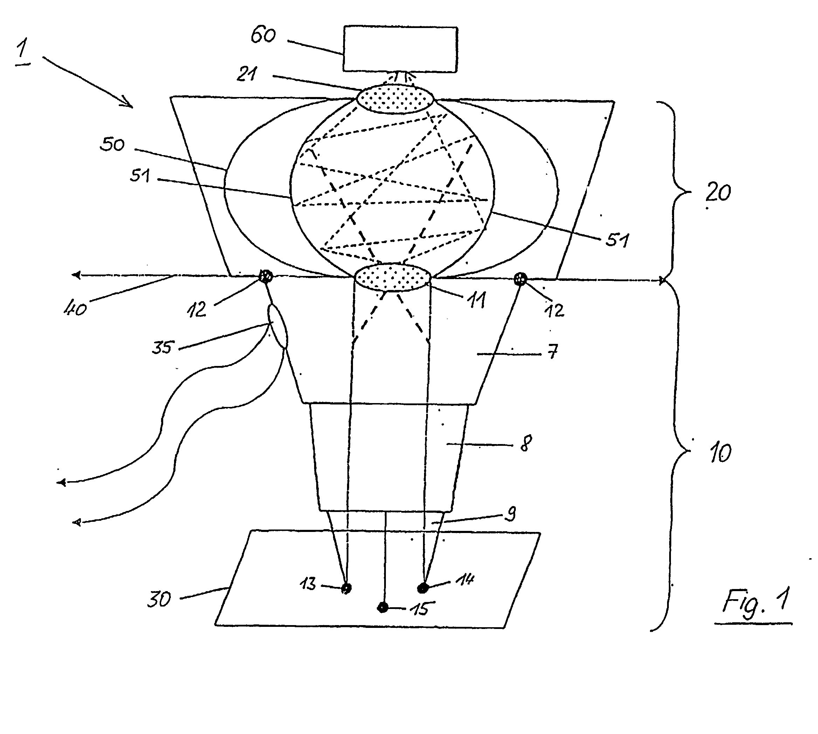

Fig. 1 schematically shows a first embodiment of the inventive measurement head 1, comprising a front unit 10 and a rear unit 20. The front unit is collapsible, in that cases comprises three segments 7, 8, 9 being engaged with each other and that can be pushed into one another and into the rear unit 20.

At the most outward segment 9 there are provided carrier points 13, 14, 15, against which a sample 30 is positioned. Each carrier point 13, 14, 15 is provided with a sensor comprising a conductive element that can be slightly pushed into respective bearings, thereby closing an electrical circuit and providing a signal indicating that the sample is in contact with the respective carrier point. A combined signal of all sensors of the three carrier points indicates that the sample is in the desired position relative to the front unit.

The front unit 10 further comprises sensors 12 for indicating, when the front unit is in the measuring position, i.e. when the single segments 7, 8, 9 are pushed into one another and into the rear unit 20. A combination of all signals therefor indicates a correct position of the sample relative to the Spectrometer or another optical measurement system.

Further a suction port 35 is provided, whereto a vacuum device (not shown) is attached for cleaning the front unit, especially from particles or abrasive grit originating from the grinding procedure. In the case of contact measurement position, the vacuum device further supports sample positioning.

The front unit 10 is separated from the rear unit 20 by a window 11, being transparent for the measurement radiation. Particles and dirt, especially the above mentioned abrasive grit, are therefore prevented from entering the rear unit and to contaminate the sensitive spectrometer or optical device.

The rear unit 20 comprises a spherical collection optical system 50 and a detector 60. The collection optical system is coated with gold, thereby ensuring multiple reflection of diffused and scattered radiation. A higher efficiency of collecting and detecting not only direct reflected radiation but also scattered radiation is ensured. Again, the spherical collection optical system 50 is separated from the detector 60 by a transparent window 21.

In this embodiment, the carrier points 13, 14, 15 are positioned on a circle with a radius of 6 cm. The windows 11,21, also having a circular shape, have a diameter of about 2,5 cm. Of course, different sizes of the shown apparatus are possible, depending on the size of samples to be measured and other environmental requirements.

The sensors, being positioned in the carrier points 13, 14, 15 and the sensors 12 are connected with control units. As soon as all sensors are indicating the correct position of the sample to be tested, i.e. within the interface line 40, the measurement procedure will be triggered. Thereby the positioning is automatically secured and controlled and the measurement procedure, i.e. the radiation of the sample surface, will be conducted automatically. Even unskilled or untrained personal can easily operate the inventive measurement head and achieve reliable. results.

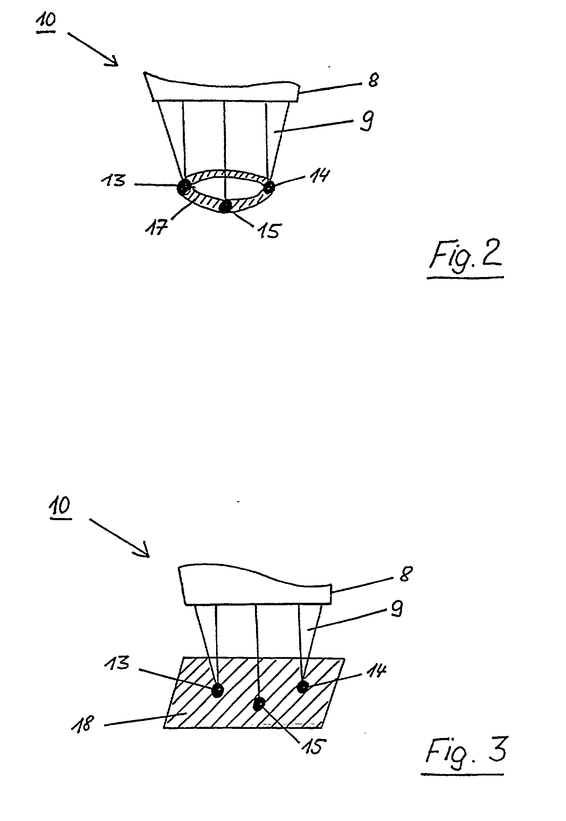

In Fig. 2, a part of the front unit 10 of a further embodiment is shown in more detail. Here again the carrier points 13, 14, 15, being attached at the segments 9 of the front unit 10, show a triangular positioning. Furthermore, in contrast to the embodiment shown in Fig. 1, were only these three carrier points 13, 14, 15 are provided for contacting the sample, thereby realizing a pure triangle device, the carrier points 13, 14, 15, of this device are provided with a connecting ring 17 having a plane surface. This ring 17 provides a contact surface for positioning a sample 30 (not shown in this figure) to be tested. The outer radius of the ring 17 is 7 cm in this embodiment, but can certainly have other especially smaller dimensions, as mentioned above.

The sensors of the carrier points 13, 14, 15 are positioned on the outer surface of the ring 17 to be contacted by the sample 30.

Fig. 3 shows a segment 9 of a front unit 10 of a still further embodiment. Here a plate 18 is provided instead of a ring 17, in connecting with the carrier points 13, 14, 15. The carrier points 13, 14, 15 are again positioned in a triangle position with a distance of 8 cm of each other. The rectangular plate 18 has side lengths of 20 cm. Of course, also a plate having a circular shape or any other shape and size as well as different distances of the carrier points can be provided. Again the sensors of the carrier points 13, 14, 15 are positioned on the outer surface of the plate 18 to be contacted by the sample 30.

The embodiments shown in Fig. 2 and 3 are especially preferred, when samples or group of samples with essentially flat surfaces have to be tested, whereas samples with curved or irregular surfaces will preferably be tested with an embodiment shown in Fig. 1.

The features of the present invention disclosed in the specification, the claims and/or the accompanying drawings may, both separately and in any combination thereof, be material for realizing the invention in various forms thereof.

## Claims

1. Measurement head for an optical measurement device, especially a spectrometer device, comprising
- a front unit (10), being moveable and/or compressible and extendable between a starting position and a measuring position, wherein said front unit (10) is biased to be in the starting position,
- a fixed rear unit (20),
- a sensor (12) for indicating, whether said front unit (10) is in said measuring position,
**characterized in that**
said front unit (10) further comprises at least three carrier points (13, 14, 15) for positioning a sample (30) relative to said front unit (10), wherein said at least three carrier points (13, 14, 15) are each provided with a sensor indicating whether said sample (30) is in contact with the respective carrier point (13, 14, 15).

2. Measurement head according to claim 1, **characterized in that** each of said sensors of said at least three carrier points (13, 14, 15) comprises an electrical contact and is activated by an applied force or pressure.

3. Measurement head according to claim 2 or 3, **characterized in that** each of said sensors of said at least three carrier points (13, 14, 15) comprises at least one movable conductive element closing an electrical circuit, when a force or pressure is applied.

4. Measurement head according to claim 2 or 3, **characterized in that** the sensors of said at least three carrier points (13, 14, 15) are provided as switches, giving a signal for triggering measurement Operations, when being activated.

5. Measurement head according to one of the preceding claims, **characterized in that** said front unit (10) comprises exactly three carrier points (13, 14, 15).

6. Measurement head according to one of the preceding claims, **characterized in that** said at least three carrier points (13, 14, 15) further comprise a ring-like member (17) having a fiat surface, wherein the sensors of said at least three carrier points are positioned on an outer surface of said ring-like member (17).

7. Measurement head according to one of claims 1 to 5, **characterized in that** said at least three carrier points (13, 14, 15) further comprise a plate (18) having a fiat surface, wherein the sensors of said at least three carrier points are positioned on an outer surface of said plate (18).

8. Measurement head according to one of the preceding claims, **characterized in that** said front unit (10) further comprises spring or bumper means.

9. Measurement head according to one of the preceding claims, **characterized in that** said front unit (10) further comprises collapsible bellows.

10. Measurement head according to one of the preceding claims, **characterized in that** said front unit (10) further comprises grinding means for grinding said sample (30).

11. Measurement head according to claim 10, **characterized in that** said grinding means is exchangeable.

12. Measurement head according to one of the claims 10 or 11, **characterized in that** said grinding means is operated mechanically, preferably by moving said front unit (10) in direction towards its measuring position.

13. Measurement head according to one of the claims 10 to 12, **characterized in that** said grinding means comprises multiple elements, wherein single elements are radially retractable to open an aperture within the grinding means.

14. Measurement head according to one of the preceding claims, **characterized in that** it further comprises cleaning means for cleaning the measurement head (1) and/or said sample (30).

15. Measurement head according to claim 14, **characterized in that** said cleaning means comprises at least one vacuum and/or overpressure device.

16. Measurement head according to claim 15, **characterized in that** said at least one vacuum and/or overpressure device generates an air-flow or a gas-flow being at least partially curve-shaped.

17. Measurement head according to one of the preceding claims, **characterized in that** it further comprises a robot arm for automatically or semi-automatically grapping a sample (30) and positioning it for measurement.

18. Measurement head according to one of the preceding claims, wherein said rear unit (20) comprises a collector device (50).

19. Measurement head according to claim 18, **characterized in that** said collector device (50) is cone-shaped or a spherical System.

20. Measurement head according to claim 18 or 19, **characterized in that** said collector device (50) has reflecting surfaces (51) with a high reflection coefficient.

21. Measurement head according to claim 20, **characterized in that** said reflecting surfaces (51) are coated with a reflective material, preferably with gold, silver or copper.

## Patentansprüche

1. Meßkopf für ein optisches Meßsystem, insbesondere eine Spektrometervorrichtung, der umfaßt:
- eine Fronteinheit (10), die bewegbar und/oder komprimierbar und ausziehbar zwischen einer Startposition einer Meßposition ausgelegt ist, wobei die Fronteinheit (10) so vorgespannt ist, daß sie sich in der Startposition befindet;
- eine feststehende Rückeinheit (20);
- ein Sensor (12) zur Anzeige, ob sich die Fronteinheit (10) in ihrer Meßposition befindet,
**dadurch gekennzeichnet, daß**
die Fronteinheit (10) ferner wenigstens drei Stützpunkte (13, 14, 15) zur Positionierung einer Probe (30) relativ zu der Fronteinheit (10) umfaßt, wobei die wenigstens drei Stützpunkte (13, 14, 15) jeweils mit einem Sensor versehen sind, der anzeigt, ob sich die Probe (30) in Kontakt mit den entsprechenden Stützpunkten (13, 14, 15) befindet.

2. Meßkopf nach Anspruch 1, **dadurch gekennzeichnet, daß** jeder der Sensoren der wenigstens drei Stützpunkte (13, 14, 15) wenigstens einen elektrischen Kontakt umfaßt und mittels einer ausgeübten Kraft oder eines Drucks aktiviert wird.

3. Meßkopf nach Anspruch 2 oder 3, **dadurch gekennzeichnet, daß** jeder der Sensoren der wenigstens drei Stützpunkte (13, 14, 15) wenigstens ein bewegliches leitendes Element umfaßt, das einen elektrischen Schaltkreis schließt, wenn eine Kraft oder ein Druck ausgeübt wird.

4. Meßkopf nach Anspruch 2 oder 3, **dadurch gekennzeichnet, daß** die Sensoren der wenigstens drei Stützpunkte (13, 14, 15) als Schalter ausgebildet sind, die ein Signal zum Auslösen des Meßbetriebes erzeugen, wenn sie aktiviert werden.

5. Meßkopf nach einem der vorhergehenden Ansprüche, **dadurch gekennzeichnet, daß** die Fronteinheit (10) genau drei Stützpunkte (13, 14, 15) umfaßt.

6. Meßkopf nach einem der vorhergehenden Ansprüche, **dadurch gekennzeichnet, daß** die wenigstens drei Stützpunkte (13, 14, 15) ferner ein ringähnliches Element (17) umfassen, das eine flache Oberfläche aufweist, wobei die Sensoren der wenigstens drei Stützpunkte auf einer äußeren Oberfläche des ringförmigen Elements (17) angeordnet sind.

7. Meßkopf nach einem der Ansprüche 1 bis 5, **dadurch gekennzeichnet, daß** die wenigstens drei Stützpunkte (13, 14, 15) ferner eine Platte (18) umfassen, die eine flache Oberfläche aufweist, wobei die Sensoren der wenigstens drei Stützpunkte auf einer äußeren Oberfläche der Platte (18) angeordnet sind.

8. Meßkopf nach einem der vorhergehenden Ansprüche, **dadurch gekennzeichnet, daß** die Fronteinheit (10) ferner ein Federmittel oder ein Puffermittel umfaßt.

9. Meßkopf nach einem der vorhergehenden Ansprüche, **dadurch gekennzeichnet, daß** die Fronteinheit (10) ferner zusammenfaltbare Balgelemente umfaßt.

10. Meßkopf nach einem der vorhergehenden Ansprüche, **dadurch gekennzeichnet, daß** die Fronteinheit 10 ferner ein Schleifmittel zum Schleifen der Probe (30) umfaßt.

11. Meßkopf nach Anspruch 10, **dadurch gekennzeichnet, daß** dieses Schleifmittel austauschbar ausgebildet ist.

12. Meßkopf nach einem der Ansprüche 10 oder 11, **dadurch gekennzeichnet, daß** das Schleifmittel mechanisch betrieben wird, bevorzugt durch Bewegen der Fronteinheit (10) in Richtung auf die Meßposition.

13. Meßkopf nach einem der Ansprüche 10 bis 12, **dadurch gekennzeichnet, daß** das Schleifmittel eine Vielzahl von Elementen umfaßt, wobei einzelne Elemente radial zurückziehbar ausgebildet sind, so daß diese eine Öffnung innerhalb des Schleifmittels freigeben.

14. Meßkopf nach einem der vorhergehenden Ansprüche, **dadurch gekennzeichnet, daß** dieser ferner ein Reinigungsmittel zum Reinigen des Meßkopfes (1) und/oder der Probe (30) umfaßt.

15. Meßkopf nach Anspruch 14, **dadurch gekennzeichnet, daß** das Reinigungsmittel wenigstens eine Vakuumvorrichtung und/oder eine Überdruckvorrichtung umfaßt.

16. Meßkopf nach Anspruch 15, **dadurch gekennzeichnet, daß** die wenigstens eine Vakuumvorrichtung und/oder Überdruckvorrichtung einen Luftstrom oder einen Gasstrom erzeugt, der wenigstens teilweise bogenförmig ausgebildet ist.

17. Meßkopf nach einem der vorhergehenden Ansprüche, **dadurch gekennzeichnet, daß** dieser ferner einen Roboterarm für ein automatisches oder semi-automatisches Ergreifen und für ein Positionieren einer Probe (30) für die Messung umfaßt.

18. Meßkopf nach einem der vorhergehenden Ansprüche, wobei die Rückeinheit (20) eine Sammelvorrichtung (50) umfaßt.

19. Meßkopf nach Anspruch 18, **dadurch gekennzeichnet, daß** die Sammelvorrichtung (50) ein kegelförmiges oder ein sphärisches System ist.

20. Meßkopf nach Anspruch 18 und 19, **dadurch gekennzeichnet, daß** die Sammelvorrichtung (50) reflektierende Oberflächen (51) mit einem hohen Reflexionskoeffizienten aufweist.

21. Meßkopf nach Anspruch 20, **dadurch gekennzeichnet, daß** die reflektierenden Oberflächen (51) mit einem reflektierenden Material, bevorzugt mit Gold, Silber oder Kupfer, beschichtet sind.

## Revendications

1. Tête de mesure destinée à un dispositif de mesure optique, en particulier un dispositif de spectromètre, comprenant
- une unité avant (10), qui est mobile et/ou qui peut être comprimée et qui peut être étendue entre une position de départ et une position de la mesure, où ladite unité avant (10) est sollicitée pour se trouver dans la position de départ,
- une unité arrière fixe (20),
- un capteur (12) destiné à indiquer si ladite unité avant (10) se trouve dans ladite position de mesure,
**caractérisée en ce que**
ladite unité avant (10) comprend en outre au moins trois points de support (13, 14, 15) destinés à positionner un échantillon (30) par rapport à ladite unité avant (10), où lesdits au moins trois points de support (13, 14, 15) sont chacun munis d'un capteur indiquant si ledit échantillon (30) est en contact avec le point de support respectif (13, 14, 15).

2. Tête de mesure selon la revendication 1, **caractérisée en ce que** chacun desdits capteurs desdits au moins trois points de support (13, 14, 15) comprend un contact électrique et est activé par une force ou une pression appliquée.

3. Tête de mesure selon la revendication 2 ou 3, **caractérisée en ce que** chacun desdits capteurs desdits au moins trois points de support (13, 14, 15) comprend au moins un élément conducteur mobile fermant un circuit électrique, lorsqu'une force ou une pression est appliquée.

4. Tête de mesure selon la revendication 2 ou 3, **caractérisée en ce que** les capteurs desdits au moins trois points de support (13, 14, 15) sont prévus en qualité de commutateurs, fournissant un signal destiné à déclencher les opérations de mesure, lorsqu'ils sont activés.

5. Tête de mesure selon l'une des revendications précédentes, **caractérisée en ce que** ladite unité avant (10) comprend exactement trois points de support (13, 14, 15).

6. Tête de mesure selon l'une des revendications précédentes, **caractérisée en ce que** lesdits au moins trois points de support (13, 14, 15) comprennent en outre un élément semblable à un anneau (17) comportant une surface plane, où les capteurs desdits au moins trois points de support sont positionnés sur une surface extérieure dudit élément semblable à un anneau (17).

7. Tête de mesure selon l'une des revendications 1 à 5, **caractérisée en ce que** lesdits au moins trois points de support (13, 14, 15) comprennent en outre une plaque (18) présentant une surface plane, où les capteurs desdits au moins trois points de support sont positionnés sur une surface extérieure de ladite plaque (18).

8. Tête de mesure selon l'une des revendications précédentes, **caractérisée en ce que** ladite unité avant (10) comprend en outre un moyen de ressort ou d'amortisseur.

9. Tête de mesure selon l'une des revendications précédentes, **caractérisée en ce que** ladite unité avant (10) comprend en outre un soufflet repliable.

10. Tête de mesure selon l'une des revendications précédentes, **caractérisée en ce que** ladite unité avant (10) comprend en outre un moyen de rectification destiné à rectifier ledit échantillon (30).

11. Tête de mesure selon la revendication 10, **caractérisée en ce que** ledit moyen de rectification est échangeable.

12. Tête de mesure selon l'une des revendications 10 ou 11, **caractérisée en ce que** ledit moyen de rectification est mis en oeuvre mécaniquement, de préférence en déplaçant ladite unité avant (10) dans une direction vers sa position de mesure.

13. Tête de mesure selon l'une des revendications 10 à 12, **caractérisée en ce que** le moyen de rectification comprend de multiples éléments, où les éléments unitaires peuvent être radialement rétractés pour ouvrir une ouverture à l'intérieur du moyen de rectification.

14. Tête de mesure selon l'une des revendications précédentes, **caractérisée en ce qu'**elle comprend en outre un moyen de nettoyage destiné à nettoyer la tête de mesure (1) et/ou ledit échantillon (30).

15. Tête de mesure selon la revendication 14, **caractérisée en ce que** ledit moyen de nettoyage comprend au moins un dispositif de dépression et/ou de surpression.

16. Tête de mesure selon la revendication 15, **caractérisée en ce que** ledit au moins un dispositif de dépression et/ou de surpression génère un flux d'air ou un débit de gaz qui est au moins partiellement en forme de courbe.

17. Tête de mesure selon l'une des revendications précédentes, **caractérisée en ce qu'**elle comprend en outre un bras de robot destiné à saisir automatiquement ou semi-automatiquement un échantillon (30) et destiné à le positionner en vue d'une mesure.

18. Tête de mesure selon l'une des revendications précédentes, dans laquelle ladite unité arrière (20) comprend un dispositif de collecteur (50).

19. Tête de mesure selon la revendication 18, **caractérisée en ce que** ledit dispositif de collecteur (50) est en forme de cône ou est un système sphérique.

20. Tête de mesure selon la revendication 18 ou 19, **caractérisée en ce que** ledit dispositif de collecteur (50) présente des surfaces réfléchissantes (51) présentant un coefficient de réflexion élevé.

21. Tête de mesure selon la revendication 20, **caractérisée en ce que** lesdites surfaces réfléchissantes (51) sont revêtues d'un matériel réfléchissant, de préférence d'or, d'argent ou de cuivre.
